# EUROPÄISCHE PATENTSCHRIFT

(11) **EP 3 334 059 B1**
(45) Veröffentlichungstag und Bekanntmachung des Hinweises auf die Patenterteilung: **25.11.2020**
(21) Anmeldenummer: 18150663.5
(22) Anmeldetag: 07.03.2009
(51) Int. Cl.: H04B 7/155

(54) **TDD-REPEATER FÜR EIN DRAHTLOS-NETZ UND VERFAHREN ZUM BETRIEB EINES SOLCHEN REPEATERS**
TDD REPEATER FOR A WIRELESS NETWORK AND METHOD FOR OPERATING SUCH A REPEATER
RÉPÉTEUR TDD POUR UN RÉSEAU SANS FIL ET PROCÉDÉ DE FONCTIONNEMENT D'UN TEL RÉPÉTEUR

(30) Priorität: 09.04.2008 DE 102008017881
(43) Veröffentlichungstag der Anmeldung: 13.06.2018
(62) Teilanmeldung aus: 13005254.1
(73) Patentinhaber: Andrew Wireless Systems GmbH, 86675 Buchdorf (DE)
(72) Erfinder: BRAZ, Oliver, 86653 Monheim (DE); GUNZNER, Peter, 86653 Monheim (DE); SCHMALISCH, Mathias, Lynchburg, VA 24502 (US); SCHMID, Peter, 86688 Marxheim-Neuhausen (DE); STEFANIk, Jörg, 86609 Donauwörth (DE)
(74) Vertreter: FDST Patentanwälte

(56) Entgegenhaltungen:
- US-A1- 2007 268 846
- US-A1- 2007 291 668

## Beschreibung

Die Erfindung bezieht sich auf einen Repeater zur Übertragung von Kommunikationssignalen in einem drahtlosen Netz - beispielsweise einem Mobilfunknetz oder einem sogenannten "Wireless Local Area Network" (WLAN) - nach dem sogenannten Time-Division-Duplex(TDD)-Verfahren. Die Erfindung bezieht sich weiterhin auf ein Verfahren zum Betrieb eines solchen Repeaters.

Innerhalb eines Drahtlos-Netzes erfolgt üblicherweise eine Kommunikation zwischen sogenannten Basisstationen und Datenempfängern und -sendern, die nachfolgend als Netzendgeräte bezeichnet sind. Im Falle eines Mobilfunknetzes handelt es sich bei diesen Netzendgeräten um Mobilfunkendgeräte ("Handys"), im Falle eines WLAN typischerweise um mobile Computer ("Laptops") mit entsprechender Netzkarte. Bei dem Datenaustausch zwischen der Basisstation und einem Netzendgerät werden Funksignale einerseits in einer sogenannten "Downlink-Richtung" von der Basisstation an das Netzendgerät und andererseits in einer sogenannten "Uplink-Richtung" von dem Netzendgerät an die Basisstation übertragen. Um den Signalverkehr in Uplink-Richtung und Downlink-Richtung voneinander trennen zu können, wird u. a. das sogenannte Time-Division-Duplex(TDD)-Verfahren (Zeitduplexverfahren) eingesetzt. Bei dem TDD-Verfahren wird die gleiche Übertragungsfrequenz sowohl in Uplink- als auch in Downlink-Richtung eingesetzt. Für eine ungestörte Signalübertragung wird jeder Signalrichtung jeweils ein definiertes Zeitfenster zugewiesen, so dass mit einer bestimmten Taktung abwechselnd in Uplink- und Downlink-Richtung gesendet wird. Die Taktung wird üblicherweise von der Basisstation vorgegeben.

Um eine Signalübertragung auch in einem für Funkwellen abgeschatteten Gebiet, wie beispielsweise in einem Tunnel oder einem Gebäude, zu ermöglichen, werden sogenannte Repeater eingesetzt, die übertragungstechnisch der Basisstation und den Netzendgeräten zwischengeschaltet sind. Ein auf dem TDD-Verfahren arbeitender Repeater ist beispielsweise aus US 2007/0015462 A1 bekannt.

In einer auch als Verteilsystem bezeichneten Bauform umfasst ein solcher Repeater eine Mastereinheit, die insbesondere mit der Basisstation des Funknetzes kommuniziert, sowie mindestens eine sogenannte "Remote-Unit", welche - beispielsweise im Gebäude angeordnet - den Kontakt zu dem Netzendgerät herstellt. Die Signalübertragung zwischen der Mastereinheit und der Remote-Unit erfolgt dabei häufig in Form eines optischen Kommunikationssignals über Lichtwellenleiter, beispielsweise Glasfaserkabel.

Dabei leitet die Mastereinheit das ihr von der Basisstation zugehende Signal in der Downlink-Richtung an die Remote-Unit weiter. Umgekehrt leitet die Remote-Unit ein von dem Mobilfunkendgerät kommendes Signal in der Uplink-Richtung an die Mastereinheit weiter. Häufig werden hierbei die Signale in Uplink- und Downlink-Richtung über einen gemeinsamen Wellenleiter übertragen.

Um einen solchen Repeater im Rahmen einer TDD Signalübertragung einsetzen zu können, muss die Signalübertragung über den Wellenleiter an die vorgegebene Taktung der umgebenden Funksignalübertragung angepasst sein. Insbesondere müssen die Mastereinheit und die Remote-Unit nach Maßgabe der Taktung aufeinander synchronisiert sein.

Der Erfindung liegt die Aufgabe zugrunde, einen Repeater anzugeben, der für eine Time-Division-Duplex Übertragung von Kommunikationssignalen besonders geeignet ist. Als Kommunikationssignale sind in diesem Zusammenhang - im Gegensatz zu repeaterinternen Signalen - diejenigen Signale bezeichnet, die über den Repeater hinweg zwischen der Basisstation und den Netzendgeräten übertragen werden. Der Erfindung liegt weiterhin die Aufgabe zugrunde, ein zum Betrieb eines solchen Repeaters besonders geeignetes Verfahren anzugeben. Bezüglich des Repeaters wird diese Aufgabe erfindungsgemäß gelöst durch die Merkmale des Anspruchs 1. Der Repeater umfasst eine Mastereinheit zur Kommunikation mit einer Basisstation eines Drahtlos-Netzes, mindestens eine Remote-Unit zur Kommunikation mit einem Netzendgerät, sowie einen die Remote-Unit mit der Mastereinheit verbindenden Wellenleiter zur Übertragung der Kommunikationssignale in einer Uplink-Richtung von der Remote-Unit zur Mastereinheit und in einer Downlink-Richtung von der Mastereinheit zur Remote-Unit. Sowohl die Mastereinheit als auch die Remote-Unit umfassen jeweils einen - nachfolgend als (Zeit-)Duplexer bezeichneten - Schalter zur Umschaltung zwischen der Signalübertragung in Uplink-Richtung und der Signalübertragung in Downlink-Richtung. Beide Duplexer werden von einer in der Mastereinheit angeordneten Synchronisationseinheit angesteuert, die dazu ausgebildet ist, aus dem der Mastereinheit - insbesondere von der Basisstation - zugeführten Kommunikationssignal eine Taktung zu ermitteln und ein dieser Taktung entsprechendes Steuersignal an die Duplexer abzugeben.

Mit dem vorgeschlagenen Repeater ist es auf einfache und effektive Weise möglich, die Übertragung bzw. Übertragungsrichtung der Kommunikationssignale an eine von der Basisstation vorgegebene Taktung anzupassen. Als besonders vorteilhaft zeigt es sich dabei, dass bei dem vorgeschlagenen Repeater auch der Duplexer der Remote-Unit durch die in der Mastereinheit angeordnete Synchronisationseinheit mitsynchronisiert wird, wodurch der Repeater besonders rationell ausgebildet werden kann.

Der Repeater ist bevorzugt für eine optische Signalübertragung zwischen der Mastereinheit und der Remote-Unit ausgelegt. In diesem Fall handelt es sich bei dem Wellenleiter um einen Lichtwellenleiter, insbesondere ein Glasfaserkabel. Alternativ hierzu kann aber auch eine elektrische Signalübertragung zwischen der Mastereinheit und der Remote-Unit vorgesehen sein. In diesem Fall ist der Wellenleiter insbesondere als Koaxialkabel oder Hohlleiter ausgebildet.

In einer besonders effektiven Ausführungsform der Erfindung ist der Repeater dazu eingerichtet, das Steuersignal zur Ansteuerung des Duplexers der Remote-Unit als (optisches oder elektrisches) Signal über den - zum Austausch des Kommunikationssignals ohnehin vorgesehenen - Wellenleiter an die Remote-Unit zu übertragen. Eine einfache Trennung des Steuersignals von dem - über denselben Wellenleiter übertragenen - Kommunikationssignal wird dabei insbesondere dadurch ermöglicht, dass die Synchronisationseinheit das Steuersignal mit einer von dem Kommunikationssignal unterschiedlichen Modulationsfrequenz versieht.

Zur Erfassung der Taktung umfasst die Synchronisationseinheit zweckmäßigerweise einen Koppler, mit dem sie das Kommunikationssignal abgreift. Die Synchronisationseinheit ermittelt dabei ein dem Kommunikationssignal überlagertes Taktsignal, das beispielsweise durch einen sogenannten "Pilotton" oder eine Synchronisationssequenz in einer Präambel eines Übertragungsrahmens des Kommunikationssignals gebildet sein kann. Insbesondere umfasst die Synchronisationseinheit zur Extraktion des Taktsignals aus dem Kommunikationssignal einen insbesondere als Mikrocontroller ausgebildeten Schaltkreis, dem das ausgekoppelte Signal zugeführt ist.

Bevorzugt wird das Steuersignal zunächst in Form eines elektrischen Radiofrequenz(RF)-Signals erzeugt. Die Synchronisationseinheit umfasst hierzu einen Frequenzgenerator. Zur Übertragung an die Remote-Unit wird dieses RF-Steuersignal bevorzugt in ein optisches Steuersignal umgewandelt und über den Wellenleiter an die Remote-Unit übertragen. Die Mastereinheit umfasst hierzu zweckmäßigerweise einen optischen Sender (Transmitter). In der Remote-Unit wird das Steuersignal in diesem Fall mit einem dort befindlichen optischen Empfänger (Receiver) wieder in ein elektrisches Steuersignal umgewandelt und zur Ansteuerung des in der Remote-Unit angeordneten Duplexers eingesetzt.

In einer weiteren Ausführungsform der Erfindung umfasst der Repeater mindestens zwei Remote-Units, welche über je einen separaten Wellenleiter mit der Mastereinheit verbunden sind. Jede dieser Remote-Units umfasst einen Duplexer. Zudem ist auch in der Mastereinheit für jede Remote-Unit ein Duplexer vorgesehen. Rationellerweise sind dabei alle Duplexer durch eine gemeinsame - wiederum in der Mastereinheit angeordnete - Synchronisationseinheit angesteuert. Zusätzlich oder alternativ dazu umfasst der Repeater mindestens zwei Remote-Units, welche über einen gemeinsamen Wellenleiter mit der Mastereinheit verbunden sind. Der Repeater ist hierbei daraufhin ausgelegt, die einer jeden Remote-Unit zugeordneten Signale auf unterschiedliche Übertragungs-Wellenlängen aufzumodulieren, so dass diese Signale über ihre spezifische Übertragungswellenlänge trennbar sind.

In einer bevorzugten Ausführungsform des Repeaters sind insbesondere mehrere Remote-Units in einer sogenannten mxn MIMO (Multiple Input Multiple Output; m,n=2,3,...) Konfiguration an die Mastereinheit angeschlossen. Hierbei beinhaltet die Mastereinheit mehrere getrennte, jeweils mit einer Remote-Unit korrespondierende Übertragungsstrecken. Die Mastereinheit ist andererseits mit zwei Antennenanschlussstellen zur Signalübertragung mit der Basisstation versehen. Bezüglich des Verfahrens wird die Aufgabe unter Nutzung des vorstehend beschriebenen Repeaters erfindungsgemäß gelöst durch ein Verfahren zum Betrieb eines vorbeschriebenen Repeaters mit den Merkmalen des Anspruchs 8.

Von der in der Mastereinheit angeordneten Synchronisationseinheit wird aus dem der Mastereinheit zugeführten Kommunikationssignal eine Taktung ermittelt und ein dieser Taktung entsprechendes Steuersignal an die in der Mastereinheit und in der oder jeder Remote-Unit angeordneten Schalter abgegeben, wobei mit diesem Steuersignal sowohl der Schalter der Mastereinheit als auch der Schalter der oder jeder Remote-Unit derart angesteuert werden, dass die Schalter synchron mit der vorgegebenen Taktung zwischen einer Signalübertragung in Uplink-Richtung und einer Signalübertragung in Downlink-Richtung umschalten.

Es ist vorgesehen, von der Synchronisationseinheit anhand eines - insbesondere von der Basisstation - vorgegebenen Taktsignals ein Steuersignal zu erzeugen, und mit diesem Steuersignal sowohl den Duplexer der Mastereinheit als auch den Duplexer der Remote-Unit derart anzusteuern, dass die Umschaltung der Signalübertragung zwischen Uplink- und Downlink-Richtung synchron - also näherungsweise zeitgleich - mit der vorgegebenen Taktung erfolgt.

Bei der synchronen Ansteuerung der Duplexer wird aber bevorzugt die Laufzeit der Kommunikationssignale zwischen der Mastereinheit und der Remote-Unit berücksichtigt. Die in der Mastereinheit bzw. der der Remote-Unit angeordneten Duplexer werden dabei nicht exakt zeitgleich, sondern mit einem geringen Zeitversatz geschaltet, der etwa der Signallaufzeit entspricht. Die Umschaltung des Schalters in der Mastereinheit und des Schalters in der Remote-Unit erfolgt somit vorteilhafterweise um eine etwa der Signallaufzeit zwischen der Mastereinheit und der Remote-Unit entsprechende Zeitspanne zeitversetzt.

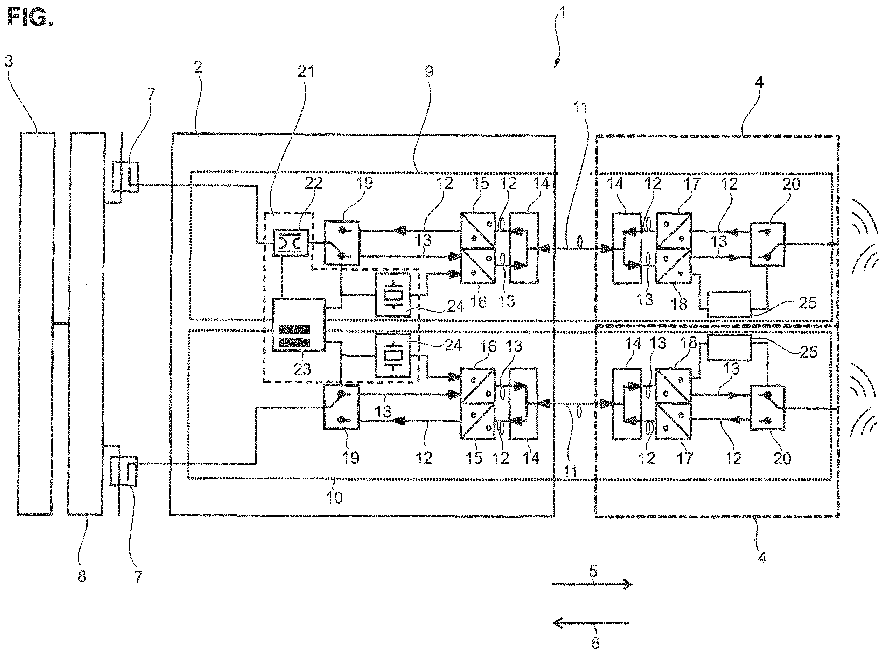

Nachfolgend wird ein Ausführungsbeispiel der Erfindung anhand einer Zeichnung näher erläutert. Darin zeigt die einzige Figur in schematischer Darstellung einen Repeater 1 eines Drahtlos-Netzes zur sogenannten "Time-Division-Duplex" Signalübertragung in ein für Funkwellen abgeschattetes Gebiet, wie beispielsweise ein Gebäude.

Der Repeater 1 umfasst eine Mastereinheit 2, welche - hier leitungsgebunden - mit einer Basisstation 3 (in der vorliegenden Figur links dargestellt) des Drahtlos-Netzes kommuniziert. Außerdem umfasst der Repeater 1 zwei Remote-Units 4 (in der vorliegenden Figur rechts dargestellt), welche - beispielsweise im Gebäude angeordnet - über schematisch angedeutete Funkwellen mit einem mobilen Netzendgerät (z.B. einem Laptop oder Handy) kommunizieren. Dabei wird ein von der Basisstation 3 ankommendes Radiofrequenz (RF) -Kommunikationssignal in einer sogenannten (durch einen Pfeil gekennzeichneten) Downlink-Richtung 5 als optisches Kommunikationssignal an die Remote-Units 4 weitergeleitet, dort in ein Funksignal rückgewandelt und an das Netzendgerät ausgesandt. Umgekehrt wird in einer sogenannten (wiederum durch einen Pfeil gekennzeichneten) Uplink-Richtung 6 ein von dem Netzendgerät ausgehendes Kommunikationssignal als optisches Kommunikationssignal an die Mastereinheit 2 weitergeleitet und von dort an die Basisstation 3 übertragen.

Der Repeater 1 ist hier in einer sogenannte "2x2 Multiple Input Multiple Output" (MIMO) Konfiguration ausgebildet. Dementsprechend verfügt die Basisstation 3 über zwei Antennenanschlussstellen 7, welche über eine Antenne oder Verteilerschiene 8 mit der Basisstation 3 verbunden sind. Andererseits erfolgt die Signalübertragung zu den beiden Remote-Units 4 über zwei getrennte Kanäle, nämlich über eine erste (schematisch angedeutete) Übertragungsstrecke 9 und eine zweite (wiederum schematisch angedeutete) Übertragungsstrecke 10. Dabei umfasst jede Übertragungsstrecke 9, 10 zur optischen Signalübertragung einen separaten Lichtwellenleiter, hier als Glasfaserkabel 11 ausgeführt, über welchen jede Remote-Unit 4 mit der Mastereinheit 2 verbunden ist. Alternativ hierzu ist auch eine durch eine Frequenzumwandlung signaltechnisch getrennte Signalübertragung über einen gemeinsamen Lichtwellenleiter möglich (Frequenz Duplex).

Der Repeater 1 ist für eine Signalübertragung nach dem sogenannten Time-Division-Duplex-Verfahren (Zeitduplexverfahren) ausgebildet. Hierbei werden die (optischen) Kommunikationssignale nach einer von der Basisstation 3 vorgegebenen Taktung zeitlich abwechselnd in Downlink-Richtung 5 bzw. Uplink-Richtung 6 übertragen. Hierzu ist jede Übertragungsstrecke 9, 10 sowohl innerhalb der Mastereinheit 2 als auch innerhalb der Remote-Unit 4 in eine - teils optische, teils elektrische - Uplink-Strecke 12 und in eine Downlink-Strecke 13 aufgespalten. Dabei ist jeweils der optische Teil der Strecke über eine Y-Verbindung 14 mit dem Glasfaserkabel 11 gekoppelt. Der elektrische Teil steht zumindest indirekt mit der Basisstation 3 bzw. mit dem mobilen Datenempfänger /-sender in Verbindung. Innerhalb jeder Strecke wird das Kommunikationssignal von einem optischen Signal in ein elektrisches Signal oder umgekehrt gewandelt. Hierzu umfasst die Mastereinheit 2 innerhalb jeder Uplink-Strecke 12 einen optischen Empfänger 15, bzw. innerhalb jeder Downlink-Strecke 13 einen optischen Sender 16. Jede Remote-Unit 4 hingegen umfasst innerhalb der Uplink-Strecke 12 einen optischen Sender 17 bzw. innerhalb der Downlink-Strecke 13 einen optischen Empfänger 18.

Zur Umschaltung der Übertragungsrichtung umfasst die Mastereinheit 2 für jede Übertragungsstrecke 9, 10 einen (Zeit-)Duplexer 19, mit welchem im elektrischen Teil zwischen der Uplink-Strecke 12 und der Downlink-Strecke 13 umgeschaltet wird. Je nach Stellung des Duplexers 19 ist somit entweder die Uplink-Strecke 12 oder die Downlink-Strecke 13 mit der Basisstation 3 verbunden. Andererseits umfasst jede Remote-Unit 4 innerhalb des elektrischen Teils der Übertragungsstrecke 9, 10 auch einen (Zeit-)Duplexer 20, mit welchem je nach Schalterstellung entweder die Uplink-Strecke 12 oder die Downlink-Strecke 13 zur Kommunikation mit dem mobilen Datenempfänger / -sender verbunden wird. Die hier dargestellte Schalterposition entspricht beispielsweise gerade einer Übertragung in Downlink-Richtung 6.

Um die Taktung der optischen Übertragung mit der Taktung der Basisstation 3 zu synchronisieren, umfasst die Mastereinheit 2 eine Synchronisationseinheit 21, welche ein von der Basisstation 3 ausgehendes Taktsignal abgreift und dementsprechend einerseits die Duplexer 19 und andererseits jeden Duplexer 20 ansteuert.

Hierzu verfügt die Synchronisationseinheit 21 über einen Koppler 22, mit welchem das der Mastereinheit 2 von der Basisstation 3 zugeführte Kommunikationssignal ausgekoppelt wird. In der dargestellten Ausführungsform der Erfindung greift der Koppler 22 dabei auf die erste Übertragungsstrecke 9 zu.

Diesem Kommunikationssignal ist ein Taktsignal beispielsweise als sogenannter Pilotton überlagert. Alternativ ist das Taktsignal als sogenannte Präambel eines Signalübertragungsrahmens vorgeschaltet. Dieses Taktsignal wird von der Synchronisationseinheit 21 identifiziert.

Hierzu umfasst die Synchronisationseinheit 21 einen integrierten Schaltkreis, insbesondere einen Mikrocontroller, hier als "Switching-Point-Detector" 23 bezeichnet, welcher mit dem Koppler 22 signaltechnisch verbunden ist. Anhand des ausgekoppelten Signals entscheidet der Switchen-Point-Detector 23, ob die Basisstation 3 gerade sendet (Übertragung in Downlink-Richtung 5) oder empfängt (Übertragung in Uplink-Richtung 6). Dementsprechend steuert der Switching-Point-Detector 23 beide Duplexer 19 der Mastereinheit 2 unmittelbar an.

Um außerdem die Duplexer 20 der Remote-Units 4 zu synchronisieren, wird anhand des ausgekoppelten Taktsignals über jedes Glasfaserkabel 11 ein optisches Steuersignal an diese übertragen. Hierzu verfügt die Synchronisationseinheit 21 für jede Übertragungsstrecke 9, 10 jeweils über einen Frequenzgenerator 24. Jeder Frequenzgenerator 24 ist ebenfalls mit dem Switching-Point-Detector 23 signaltechnisch gekoppelt und erzeugt aufgrund dessen Information ein RF-Steuersignal zur Ansteuerung des korrespondierenden Duplexers 20. Das RF-Steuersignal wird jeweils durch den optischen Sender 16 der Mastereinheit 2 in ein optisches Steuersignal umgewandelt und gemeinsam mit dem optischen Kommunikationssignal über das Glasfaserkabel 11 an die Remote-Unit 4 übertragen. Dabei werden das Steuersignal und das Kommunikationssignal zur Signaltrennung mit unterschiedlicher Modulationsfrequenz gesendet. Innerhalb der Remote-Unit 4 wird das optische Steuersignal durch den optischen Empfänger 18 in ein elektrisches rückgewandelt. Dieses Steuersignal dient wiederum als Signalgeber für eine Ansteuereinheit 25, welche schließlich den Duplexer 20 taktet.

Beide Duplexer 19, 20 einer jeden Übertragungsstrecke 9,10 werden somit synchron getaktet, wodurch die Übertragungsrichtung der Kommunikationssignale auf dem optischen Übertragungsabschnitt der Übertragungsrichtung der umgebenden Funkübertragung angepasst wird. Bei Sendebetrieb der Basisstation 3 sind somit beide Duplexer 19, 20 für eine Übertragung in Downlink-Richtung 5 geschaltet, wohingegen die Duplexer 19, 20 bei Empfangsbetrieb der Basisstation 3 für eine Übertragung in Uplink-Richtung 6 geschaltet sind.

### Bezugszeichenliste

- 1: Repeater
- 2: Mastereinheit
- 3: Basisstation
- 4: Remote-Unit
- 5: Downlink-Richtung
- 6: Uplink-Richtung
- 7: Antennenanschlussstelle
- 8: Verteilerschiene
- 9: Übertragungsstrecke
- 10: Übertragungsstrecke
- 11: Glasfaserkabel
- 12: Uplink-Strecke
- 13: Downlink-Strecke
- 14: Y-Verbindung
- 15: Empfänger
- 16: Sender
- 17: Sender
- 18: Empfänger
- 19: (Zeit-)Duplexer
- 20: (Zeit-)Duplexer
- 21: Synchronisationseinheit
- 22: Koppler
- 23: Switching-Point-Detector
- 24: Frequenzgenerator
- 25: Ansteuereinheit

## Patentansprüche

1. TDD-Repeater (1) mit
- einer Mastereinheit (2) zur Kommunikation mit einer Basisstation (3) eines Drahtlos-Netzes,
- mindestens einer Remote-Unit (4), welche beabstandet von der Mastereinheit (2) platziert ist, zur Kommunikation mit einem Netzendgerät,
- einem die Remote-Unit (4) mit der Mastereinheit (2) verbindenden Wellenleiter (11) zur Übertragung der Kommunikationssignale in einer Uplink-Richtung (6) und in einer Downlink-Richtung (5), wobei
- die Mastereinheit (2) zum Austausch von Uplink- und Downlink-Kommunikationssignalen mit der mindestens einen Remote-Unit (4) ausgebildet ist, und wobei
- die mindestens eine Remote-Unit (4) einen vorgegebenen Uplink-Pfad und einen separaten vorgegebenen Downlink-Pfad aufweist und einen mit jedem der vorgegebenen Pfade gekoppelten Schalter (20) zur Richtungsumschaltung der Signalübertragung in der mindestens einen Remote-Unit (4) zwischen der Übertragung in Uplink-Richtung (6) und Übertragung in Downlink-Richtung (5), und mit
- einer in der mindestens einen Remote-Unit (4) angeordneten Ansteuereinheit (25), wobei die Ansteuereinheit (25) ein Steuersignal empfängt, welches aus einem ausgekoppelten Taktsignal abgeleitet ist, welches von der Mastereinheit (2) zu der mindestens einen Remote-Unit (4) übertragen wird, wobei das Taktsignal von der Ansteuereinheit (25) als ein Signalgeber verwendet wird, um den Schalter (20) zu takten,
- wobei durch die Taktung des Schalters (20) die Übertragungsrichtung in der zumindest einen Remote-Unit (4) angepasst wird..

2. TDD-Repeater (1) nach Anspruch 1, wobei die Ansteuereinheit (25) dazu ausgebildet ist, einen Signalanteil der Signale der Downlink-Richtung (5) zu verarbeiten und den verarbeiteten Signalanteil des Downlink Signals zur Ermittlung der Richtung der Signalübertragung des Repeaters (1) zu nutzen.

3. TDD-Repeater (1) nach Anspruch 2, wobei die Ansteuereinheit (25) eingerichtet ist für die Verarbeitung eines Signalanteils der Signale der Mastereinheit (2) in der Downlink-Richtung (5) und den verarbeiteten Singalanteil der Mastereinheit (2) zur Ermittlung der Richtung der Signalübertragung des Repeaters (1) nutzt.

4. TDD-Repeater (1) nach Anspruch 1, der weiterhin mehrere Remote-Einheiten (4) aufweist, wobei jede Remote-Einheit (4) mit der Mastereinheit (2) durch einen separaten Wellenleiter (11) verbunden ist, wobei jede Remote-Unit (4) eine Ansteuereinheit (25) enthält, die eingerichtet ist zur Verarbeitung des Signalteils, um die Richtung der Signalübertragung des Repeaters (1) zu bestimmen.

5. TDD-Repeater (1) nach Anspruch 1, der weiterhin mehrere Remote-Einheiten (4) aufweist, die mit der Mastereinheit (2) durch einen gemeinsamen Wellenleiter (11) verbunden sind.

6. TDD-Repeater (1) nach Anspruch 1, der weiterhin in der Mastereinheit (2) mindestens einen optischen Sender aufweist, um die Downlink-Signale in optische Signale für die Übertragung zu der wenigstens einen Remote-Unit (4) umzuwandeln, und
mindestens einen optischen Empfänger in mindestens einer Remote-Unit (4), um die Downlink-Signale zu erhalten und diese zu elektrischen Signalen umzuwandeln.

7. TDD-Repeater (1) nach Anspruch 1, wobei die Mastereinheit (2) weiter aufweist einen vorgegebenen Uplink-Pfad und einen separaten vorgegebenen Downlink-Pfad und einen Schalter (19, 20) enthält, der mit jedem der vorgegebenen Pfade gekoppelt ist, um die Richtung der Signalübertragung in der Mastereinheit (2) zu ändern.

8. Verfahren zum Aufbereiten eines TDD Signals umfassend:
Übermitteln von Kommunikationssignalen an eine Mastereinheit (2) von einer Basisstation (3) eines kabellosen Netzwerkes;
Übertragung der Kommunikationssignale mit einem Wellenleiter (11) zwischen der Mastereinheit (2) und mindestens einer Remote-Unit (4), beinhaltend eine selektive Übertragung der Kommunikationssignale in eine Uplink-Richtung (6) und in eine Downlink-Richtung (5);
Verwenden eines Schalters (19, 20) in der mindestens einen Remote-Unit (4), die einen vorgegebenen Uplink Pfad und einen separaten vorgegebenen Downlink Pfad aufweist, wobei der Schalter (19, 20) mit jedem der vorgegebenen Pfade gekoppelt ist, um die Richtung der Signalübertragung zwischen der Übertragung in der Uplink-Richtung (6) und der Übertragung in der Downlink-Richtung (5) zu ändern;
Empfangen, an der Ansteuereinheit (25) in der zumindest einen Remote-Unit (4), eines Steuersignals, welches aus einem ausgekoppelten Taktsignal abgeleitet ist, welches von der Mastereinheit (2) zu der mindestens einen Remote-Unit (4) übertragen wird, wobei das Taktsignal von der Ansteuereinheit (25) als ein Signalgeber verwendet wird, um den Schalter (20) zu takten;
wobei durch die Taktung des Schalters (20) die Übertragungsrichtung in der zumindest einen Remote-Unit (4) angepasst wird.

9. TDD-Repeater (1) nach Anspruch 1 oder Verfahren nach Anspruch 8, wobei die Ansteuereinheit (25) weiterhin für die Erzeugung von Taktsignalen ausgebildet ist, um den Schalter (19, 20) der Remote-Unit (4) zu steuern.

10. TDD-Repeater (1) nach Anspruch 1 oder Verfahren nach Anspruch 8, wobei die Mastereinheit (2) und mindestens eine Remote-Unit (4) in einer Multiple Input Multiple Output (MIMO) Konfiguration ausgebildet sind.

## Claims

1. TDD repeater (1) with
- a master unit (2) for communication with a base station (3) of a wireless network,
- at least one remote unit (4), which is placed at a distance from the master unit (2), for communication with a network terminal,
- a waveguide (11), which connects the remote unit (4) to the master unit (2), for transmitting the communication signals in an uplink direction (6) and in a downlink direction (5), wherein
- the master unit (2) is designed to exchange uplink and downlink communication signals with the at least one remote unit (4), and wherein
- the at least one remote unit (4) comprises a predetermined uplink path and a separate predetermined downlink path, and a switch (20) coupled to each of the predetermined paths for changing over the direction of the signal transmission in the at least one remote unit (4) between transmission in the uplink direction (6) and transmission in the downlink direction (5), and with
- a control unit (25) arranged in the at least one remote unit (4), wherein the control unit (25) receives a control signal derived from a decoupled clock signal, which is transmitted from the master unit (2) to the at least one remote unit (4), wherein the clock signal is used by the control unit (25) as a signal generator to clock the switch (20),
- wherein the direction of transmission in the at least one remote unit (4) is adapted by the clocking of the switch (20).

2. TDD repeater (1) according to claim 1, wherein the control unit (25) is designed to process a signal portion of the signals of the downlink direction (5) and to use the processed signal portion of the downlink signal to determine the direction of signal transmission of the repeater (1).

3. TDD repeater (1) according to claim 2, wherein the control unit (25) is adapted to process a signal portion of the signals of the master unit (2) in the downlink direction (5) and uses the processed signal portion of the master unit (2) to determine the direction of signal transmission of the repeater (1).

4. TDD repeater (1) according to claim 1, further comprising a plurality of remote units (4), wherein each remote unit (4) is connected to the master unit (2) via a separate waveguide (11), wherein each remote unit (4) comprises a control unit (25) adapted to process the signal portion to determine the direction of signal transmission of the repeater (1).

5. TDD repeater (1) according to claim 1, which further comprises a plurality of remote units (4) connected to the master unit (2) by a common waveguide (11)

6. TDD repeater (1) according to claim 1, which, in the master unit (2), further comprises at least one optical transmitter for converting the downlink signals into optical signals for transmission to the at least one remote unit (4), and at least one optical receiver in at least one remote unit (4) to receive the downlink signals and convert them into electrical signals.

7. TDD repeater (1) according to claim 1, wherein the master unit (2) further comprises a predetermined uplink path and a separate predetermined downlink path and includes a switch (19, 20) coupled to each of the predetermined paths for changing the direction of signal transmission in the master unit (2).

8. Method for conditioning a TDD signal, said method comprising:
- transmitting communication signals to a master unit (2) from a base station (3) of a wireless network;
- transmission of the communication signals with a waveguide (11) between the master unit (2) and at least one remote unit (4), including a selective transmission of the communication signals in an uplink direction (6) and in a downlink direction (5);
- using a switch (19, 20) in the at least one remote unit (4), which comprises a predetermined uplink path and a separate predetermined downlink path, wherein said switch (19, 20) is coupled to each of the predetermined paths to change the direction of signal transmission between the transmission in the uplink direction (6) and transmission in the downlink direction (5);
- receiving, at the control unit (25) in the at least one remote unit (4), a control signal derived from a decoupled clock signal, which is transmitted from the master unit (2) to the at least one remote unit (4), wherein the clock signal is used by the control unit (25) as a signal generator to clock the switch (20); wherein the clocking of the switch (20) adjusts the transmission direction in the at least one remote unit (4).

9. TDD repeater (1) according to claim 1 or method according to claim 8,
wherein the control unit (25) is further designed to generate clock signals to control the switch (19, 20) of the remote unit (4).

10. TDD repeater (1) according to claim 1 or method according to claim 8,
wherein the master unit (2) and at least one remote unit (4) are designed in a Multiple Input Multiple Output (MIMO) configuration.

## Revendications

1. Répéteur TDD (1) avec
- une unité maître (2) pour la communication avec un poste de base (3) d'un réseau sans fil,
- au moins une unité à distance (4), qui est placée à distance de l'unité maître (2), pour la communication avec un terminal de réseau,
- un guide d'onde (11), qui relie l'unité à distance (4) à l'unité maître (2) pour transmettre les signaux de communication dans une direction de liaison montante (6) et dans une direction de liaison descendante (5), dans lequel
- l'unité maître (2) est conçue pour échanger des signaux de communication de liaison montante et de liaison descendante avec la au moins une unité à distance (4), et dans lequel
- la au moins une unité à distance (4) comprend un chemin de liaison montante prédéterminé et un chemin de liaison descendante prédéterminé séparé, et un commutateur (20) couplé à chacun des chemins prédéterminés pour commuter la direction de la transmission de signal dans la au moins une unité à distance (4) entre la transmission dans la direction de liaison montante (6) et la transmission dans la direction de liaison descendante (5), et avec
- une unité de commande (25) disposée dans la au moins une unité à distance (4), dans laquelle l'unité de commande (25) reçoit un signal de commande dérivé d'un signal d'horloge découplé, qui est transmis de l'unité maître (2) à la au moins une unité à distance (4), dans laquelle le signal d'horloge est utilisé par l'unité de commande (25) comme générateur de signaux pour cadencer le commutateur (20),
- dans lequel la direction de transmission dans la au moins une unité à distance (4) est adaptée par le cadencement du commutateur (20).

2. Répéteur TDD (1) selon la revendication 1, dans lequel l'unité de commande (25) est conçue pour traiter une partie de signal de la direction de la liaison descendante (5) et pour utiliser la partie traitée du signal de la liaison descendante pour déterminer la direction de transmission du signal du répéteur (1).

3. Répéteur TDD (1) selon la revendication 2, dans lequel l'unité de commande (25) est adaptée pour traiter une partie de signal de l'unité maître (2) dans la direction de la liaison descendante (5) et utilise la partie de signal traitée de l'unité maître (2) pour déterminer la direction de transmission du signal du répéteur (1).

4. Répéteur TDD (1) selon la revendication 1, comprenant en outre plusieurs unités à distance (4), dans lequel chaque unité à distance (4) est reliée à l'unité maître (2) via un guide d'onde séparé (11), dans lequel chaque unité à distance (4) comprend une unité de commande (25), qui est adaptée pour traiter la partie de signal pour déterminer la direction de transmission du signal du répéteur (1).

5. Répéteur TDD (1) selon la revendication 1, qui comprend en outre plusieurs unités à distance (4), qui sont connectées à l'unité maître (2) via un guide d'onde commun (11)

6. Répéteur TDD (1) selon la revendication 1, qui comprend en outre dans l'unité maître (2) au moins un émetteur optique pour convertir les signaux de liaison descendante en signaux optiques pour la transmission à la au moins une unité à distance (4), et
au moins un émetteur optique dans au moins une unité à distance (4) pour recevoir les signaux de la liaison descendante et les convertir en signaux électriques.

7. Répéteur TDD (1) selon la revendication 1, dans lequel l'unité maître (2) comprend en outre un chemin de liaison montante prédéterminé et un chemin de liaison descendante prédéterminé séparé et comprend un commutateur (19, 20) couplé à chacun des chemins prédéterminés pour modifier la direction de transmission du signal dans l'unité maître (2).

8. Procédé de conditionnement d'un signal TDD, le procédé comprenant :
- transmettre de signaux de communication à une unité maître (2) à partir d'un poste de base (3) d'un réseau sans fil ;
- transmission des signaux de communication avec un guide d'onde (11) entre l'unité maître (2) et au moins une unité à distance (4), comprenant une transmission sélective des signaux de communication dans une direction de liaison montante (6) et dans une direction de liaison descendante (5) ;
- utilisation d'un commutateur (19, 20) dans la au moins une unité à distance (4), l'unité à distance (4) comprenant un chemin de liaison montante prédéterminé et un chemin de liaison descendante prédéterminé séparé, dans lequel le commutateur (19, 20) est couplé à chacun des chemins prédéterminés pour modifier la direction de transmission du signal entre la transmission dans la direction de liaison montante (6) et la transmission dans la direction de liaison descendante (5) ;
- réception, au niveau de l'unité de commande (25) dans la au moins une unité à distance (4), d'un signal de commande dérivé d'un signal d'horloge découplé, qui est transmis de l'unité maître (2) à la au moins une unité à distance (4), dans lequel le signal d'horloge est utilisé par l'unité de commande (25) comme générateur de signaux pour cadencer le commutateur (20) ;
dans lequel le cadencement du commutateur (20) ajuste la direction de transmission dans la au moins une unité à distance (4).

9. Répéteur TDD (1) selon la revendication 1 ou procédé selon la revendication 8, dans lequel l'unité de commande (25) est en outre conçue pour générer des signaux d'horloge pour commander le commutateur (19, 20) de l'unité à distance (4).

10. Répéteur TDD (1) selon la revendication 1 ou procédé selon la revendication 8, dans lequel l'unité maître (2) et au moins une unité à distance (4) sont conçues dans une configuration Multiple Input Multiple Output (MIMO).
